# EUROPEAN PATENT SPECIFICATION

(11) **EP 0 958 133 B1**
(45) Date of publication and mention of the grant of the patent: **30.05.2001**
(21) Application number: 96932858.2
(22) Date of filing: 25.09.1996
(51) Int. Cl.: B30B 9/30, A01F 15/00, A01F 25/14

(54) **FEED AS WELL AS AN APPARATUS AND A METHOD FOR PRODUCING FEED**
FUTTER,VERFAHREN UND VORRICHTUNG ZU DEREN HERSTELLUNG
ALIMENT POUR ANIMAUX ET PROCEDE ET APPAREIL DE PRODUCTION DE CET ALIMENT

(30) Priority: 28.09.1995 NL 1001306
(43) Date of publication of application: 24.11.1999
(73) Proprietor: V.O.F. Handelsonderneming RUVO, 2153 AA Nieuw Vennep (NL)
(72) Inventor: VOGELAAR, Pieter, NL-2153 AA Nieuw Vennep (NL)
(74) Representative: Uittenbogaart, Gustaaf Adolf
(86) International application number: NL9600372
(87) International publication number: WO9711840

(56) References cited:
- EP-A- 0 027 824
- WO-A-88/03114
- DE-A- 4 036 211
- FR-A- 2 386 980
- US-A- 2 455 442

## Description

The invention relates to feed for domestic animals consisting among others of vegetable material such as hay or straw, dried and compressed an packaged by wrapping into a bale which material in the bale is provided with cutting faces to improve separation of the material from the bale.

Such a feed is known from DE-A-4036211 wherein it is shown how the plunger A of a bale press is provided with knives C in order to cut the material in the bale. The knives C, making longitudinal cutting faces in the bale, are so situated that the cutting faces have a minimum distance "a" from the side of the bale. The disadvantage of the known bales is that it remains difficult to take off material from the bale without loosening the material that is not yet needed.

It is an object of the present invention to remove the above mentioned disadvantages and for this purpose the bale is divided in portions by cutting faces perpendicular to the longitudinal direction and the fibres are compressed parallel to the cutting faces.

As a result, it is achieved that it is possible to easily separate a portion of the fibres from the package since there are no fibres extending from one part of the package to the other as a result of the cutting face, and due to the compression parallel to the cutting face the cutoff portion remains its shape along this face and is a fixed-shape part of the package created, which can easily be removed and used.

According to a improvement of the invention the wrapping is a closed plastic foil against which the fibres are resiliently expanded.

This results in a solid bale which is properly stackable and solid meaning a great advantage during transport and storage from manufacturer to user.

According to an embodiment of the invention the distance between the cutting faces is substantially 10 cm.

This results in a solid and easy to handle part of the bale which, upon loosening, provides sufficient material for example for a domestic animal.

According to a further improvement of the invention, the vegetable material is stripped of small broken and/or crushed fibre material and other pollutions.

Due to this feature it is prevented that during unpackaging the material pollutions such as dust exit, which could lead to pollution of the environment. In prior art bales these pollutions, mostly adhered to the wrapping, since gravity cause them to sack between the fibres to the outer edge of the material during compressing or packaging resulting in a release during opening of the package. By removing these pollutions before packaging, this discomfort is prevented.

In accordance with a further improvement the fibres are compressed to a density of more than 150 kg/m³.

This makes it possible to transport and store more material in the same volume.

The invention also includes a method of packaging the feed in accordance with the invention.

Such a method is known from DE-A-4036211. The disadvantage of the known method is that the orientation of the compressed fibres in the bale is not well determined and that it is difficult to separate a part of the material from the bale.
It is an object of the present invention to remove the above mentioned disadvantages and for this purpose the fibres of loose material transported into the pressing chamber and compressed in the pressing chamber form two directions perpendicular to the transport direction whereby the pressing in both perpendicular directions is done one after the other and during the pressing in one of the directions the material in the pressing chamber is cut into portions.

In this way the material is compacted in effective way, thereby giving the compressed bale a structure with folded layers, and separation planes for taking off portions of the material from the bale.

According to a further improvement the material is wrapped in plastic foil after pressing against which it can resiliently expand. In this way a compressed bale with a more or less smooth outside is obtained, in which the compressing pressure is directed outside causing the plastic foil to become taut which lends the required stability to the bale.

According to a further improvement during the pressing operation the distance between opposing sides of the pressing chamber perpendicular to the feed direction is reduced to less than a half. This leads to a high density of the material allowing the material to expand back against the wrapping after compression.

According to a further improvement the fibres are pre-compacted and transported by pressing means in a compacting channel while during pre-compacting the fibres are being moved with respect to each other while they are transported over a plate having slots. In this way dust and the like drop out of the apparatus into a receptacle, for example, and is not packaged, which avoids undesirable nuisance for the user.

In accordance with a further improvement a discharge opening between the compacting channel and the pressing chamber is enlarged or reduced by a control connected to a weighing device such that the weight of the packaged fibres as measured after the pressing chamber remain constant.

This leads to a constant weight of the bales in a simple manner.

The invention also includes an apparatus for performing a method according to the invention.

The invention will be explained in the following description of an exemplary embodiment with reference to a drawing in which:
Fig. 1a shows the feed according to the invention;
Fig. 1b shows the structure of the material according to the invention at the position of the cutting face;
Fig. 2 is a schematic sectional view of a part of an exemplary embodiment according to the invention;
Fig. 3 is the schematic sectional view III-III of fig. 2;
Fig. 4 is a schematic plan view of the apparatus of fig. 2;
Fig. 5 is the schematic sectional view V-V of fig. 4 in the situation that the material is pushed out of the pressing chamber after compression.

In the various figures like parts are indicated with like reference numerals.

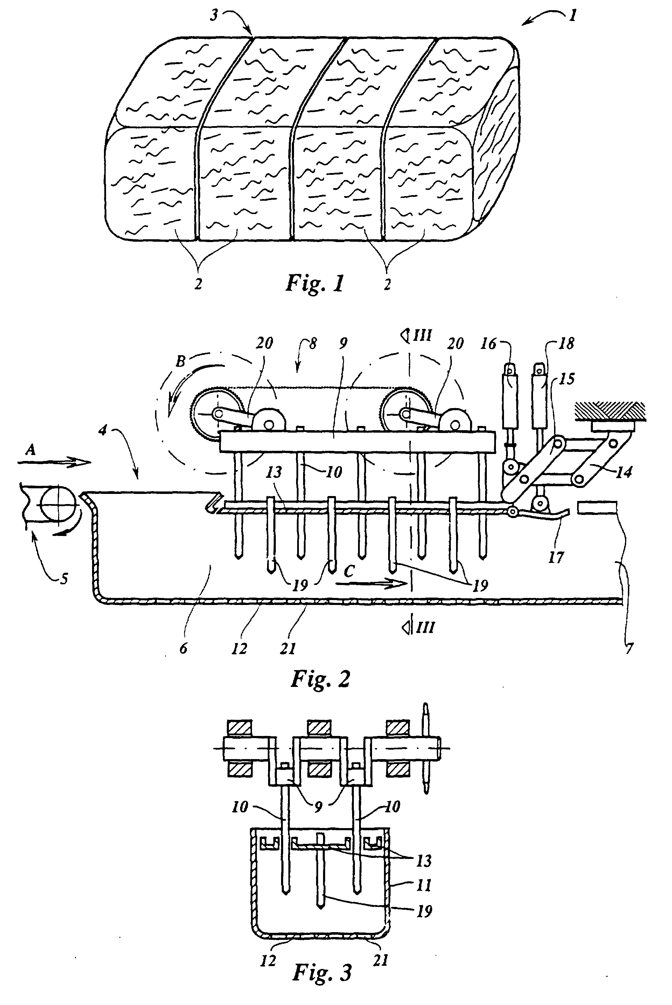

Fig. 1a shows a hay bale 1, in which the hay is packaged in a transparent plastic foil (not shown). Inwardly of the foil, the hay is divided into four portions which are separated by a separation face 3. The size of the bale 1 is 30 cm x 17 cm x 7.5 cm and the weight of the bale is approximately 1 kg. The hay consists of long fibre vegetable material which is packaged in its natural manifestation.

At the position of the cutting face of bale 1 shown in fig. 1b, it is clearly visible how the fibrous material is formed under influence of the compression, in which the fibres lie in folds p within the bale 1 and resiliently expand against a wrapping n which is formed of two strips of plastic foil which are interconnected at a seam s.

Fig. 2 and 3 show a part of the apparatus with which the hay bale 1 can be compressed. A conveyor supplies loose pickings of hay in a direction A into a supply opening 4. A pressing device 8 transports the material into a pressing channel 6 to a discharge opening 7 wherein the material is pre-compacted. The pressing channel 6 includes a bottom 12, side walls 11 and a top wall 13. The top wall 13 is moveably connected to a frame (not shown) by means of supports 14, 15 and may be moved relative to the frame through an adjustment device 16. A flap 17 is attached to the top wall 13 on the side of the discharge opening 17, said flap being adjustable relative to the top wall 13 by means of an adjusting device 18. A plurality of fixed pins 19 is mounted into the top wall 13. The bottom 12 comprises a plurality of openings 21.

The pressing device 8 includes a plurality of pressing pins 10 mounted into a beam 9, said pressing pins 10 being able to move through a slot in the top wall 13. A displacement mechanism, constructed in a known way and consisting among others of two levers 20 rotating in direction B, move pressing pin 10 in a direction C when they are in the pressing channel 6.

The operation of the apparatus is as follows: the material supplied by the conveyor belt 5 in the form of loose pickings drops into the supply opening 4 and onto the bottom 12 and is conveyed in direction C by the pressing pins 10. The material is pressed against the material which is already present in the pressing channel 6, so that the loose pickings of material are compressed or compacted. This compacting action can be influenced by changing the cross-sectional area of the pressing channel by adjusting the height of the upper wall 13 or by placing it in a slight funnel shape so that the pressing channel 6 is narrowed in direction C. The cross-section of the pressing channel 6 may also be varied at the position of the discharge opening 7 by means of the flap 17. Good results are obtained by pre-compacting the material to approximately 30 kg/m³.

When material is pushed forward by the pressing pins 10, a part of the material is retained by the fixed pins 19. As a result of this, the fibres move with respect to each other through a substantial length of the pressing channel, preferably more than one or two times the width thereof which causes small parts in the material, such as dust and grit which is present between the fibres, to drop to the bottom. These small parts, which could cause an undesired mess during feeding of the domestic animals, slide forwardly over the bottom 12 when it is advanced through the pressing channel 6 and drop through the openings 21 provided therein and do not arrive in the bale. Preferably, the openings 21 have long slits which may extend perpendicular to or lengthwise of the channel. Since the openings 21 are long, short fibres do not get stucked therein. The openings 21 may also be provided with guide strips preventing the fibres from getting stuck in the openings and allowing dust to drop down easily. Preferably the fixed pins 19 are placed in the upper part of the pressing channel 6 so that there the most strong mutual movement of the fibres may take place.

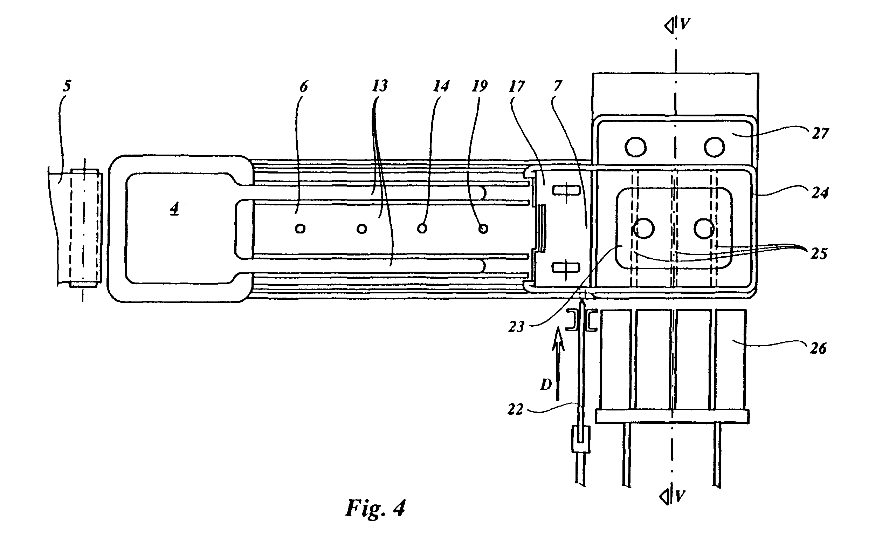

Fig. 4 shows the top view of the apparatus with the supply opening 4 and the pressing channel 6, which is attached to and connected through the discharge opening 7 to a compression chamber 23 in which a four-part push out stamp 26 is permitted to move in a direction D. The push out stamp 26 is arranged to push out a compressed bale out of the compression chamber 23 to a position under a stamp 27.

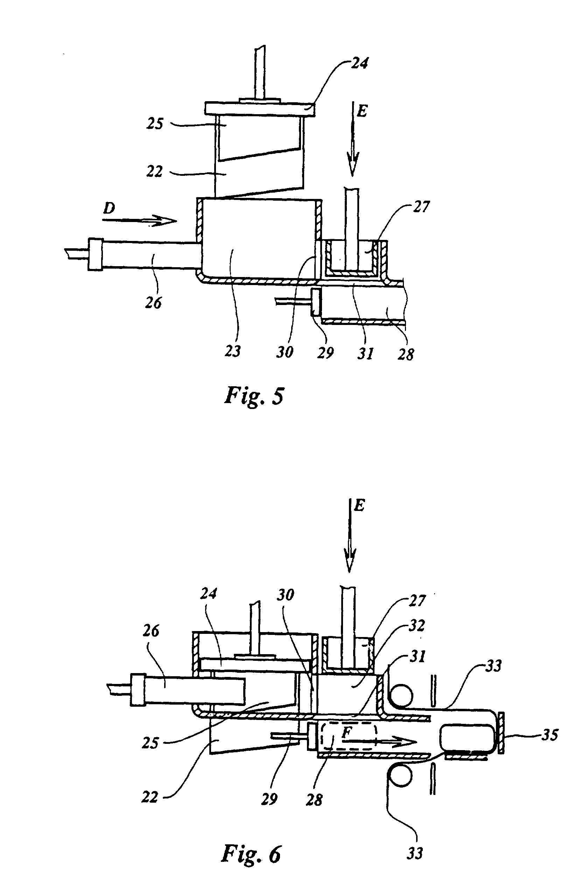

Figs. 5 and 6 show the sectional view V-V of fig. 4 through the compression chamber 23. The upper side of the compression chamber 23 is formed by a stamp 24 to which a separation knife 22 and three knives 25 are fixed. The separation knife 22 is permitted to close the discharge opening 27 of the pressing channel 26 and then simultaneously forms a part of the wall of the compression chamber 23. Another part of the wall on the vertical side of the compression chamber 23 is formed by the four-part push out stamp 26. On the other vertical side the stamp 27 forms a part of the wall at the position of an opening 30.

When the stamp 24 together with the separation knife 22, the push out stamp 26 and the stamp 27 are in the position shown in Fig. 5, the pre-compacted material may be transferred from the pressing channel 6 to the compression chamber 23. After the compression chamber 23 is filled sufficiently the stamp 24 together with the separation knife 22 is moved in direction E and consequently closes the discharge opening 7. At the same time the material is compressed and cut by the knives 25. Subsequently, the push out stamp 26 is moved in direction D halfway the compression chamber 23. The material has then obtained approximately the desired density.

The largest dimension of the compression chamber 23 in which bales of 1 kg are compressed is approximately 30 cm and this is similar to the length of the fibres which is 30 to 50 cm with hay and straw in its natural form. In most cases a plurality of these fibres will come to lie in the whole room of the compression chamber 23 and if there would be no knifes 25 it would be very hard to pull a fibre out of the compressed bale. By providing cutting faces 3 in the bale (see Fig. 1) by the knives 25 the user can easily pull a small amount of material out of the bale during use.

Fig. 6 shows how the compressed material is pushed out of the compression chamber 23 and is wrapped by a plastic foil 33. The stamp 27 is moved in a direction opposite to E, causing the opening 30 to open. The push out stamp 26 pushes the compressed material into a chamber 32 and then the stamp 27 pushes it through an opening 31 and places it in a channel 28.

After the material has arrived in channel 28, a stamp 29 pushes the material in a direction F through channel 28 against a wall 35. There, foil 33 is brought around the material in a known and not further elucidated manner. After the foil 33 has been wrapped, the bale is positioned on a rollway (not shown). A part of the rollway is constructed as a weighing machine and is connected to a control (not shown) which also controls the adjustment devices 16 and 18 described above (see Fig. 2). The weighing machine determines the weight of the compressed material and if necessary the positions of the upper wall 13 and the flap 17 are adjusted, so that the material brought into the pressing chamber 23 has the desired density. Since the dimensions of the pressing chambers 23 do not change, a constant density leads to the desired constant weight for all bales.

The various stamps and the compression chamber are dimensioned such that the material temporarily receives a higher density during compression and cutting. After the material is moved out of the compression chamber it is allowed to expand slightly in which it keeps a density which is higher than 150 kg/m³ and preferably higher than 200 kg/m³. For this purpose the stamp 24 is moved downwardly to such an extent that the material has a height of 5 cm in direction E. Due to the resiliency of the material it may expand again in the channel 28 and also after wrapping it with foil 33 to a desired height of approximately 7.5 cm.

Besides the embodiment described above various variances in the design are conceivable. If for example the compression chamber 23 has a sufficient length in a direction parallel to the pressing channel 6 to produce three bales, the material, after being pushed out of the compression chamber 23 is divided into three parts which are each packaged separately. Each bale may for example contain again three cutting faces so that it is easy to take four portions from each bale in a simple manner. In this embodiment, the stamp 24 comprises eleven knives 25 and a separation knive 22 and the push out stamp 26 consists of twelve parts.

Another variant relates to the position and the construction of the knives 25. In the exemplary embodiment described above the knives are fixed to the lower side of the stamp 24. However, there are fibrous materials which can only be cut after they are compressed to a high density. In that case, the material is compressed first to this density by the stamp 24 and the push out stamp 26 and is then cut by knives which are mounted on the stamp 24 and which are moveable separately and may cut the compressed material through slits present in the stamp 24.

## Claims

1. Feed for domestic animals consisting among others of vegetable materials such as hay or straw, dried and compressed and packaged by a wrapping into a bale (1) which material in the bale is provided with cutting faces (3) to improve separation of the material from the bale (1), **characterised in that** the bale (1) is divided in portions (2) by cutting faces (3) perpendicular to the longitudinal direction and the fibres are compressed parallel to the cutting faces (3).

2. Feed according to claim 1, **characterised in that** the wrapping is a closed plastic foil against which the fibres are resiliently expanded.

3. Feed according to claim 1 or 2, **characterised in that** the distance between the cutting faces (3) is substantially 10 cm.

4. Feed according to claim 2 or 3, **characterised in that** the vegetable material is stripped of small broken and/or crushed fibre material and other pollutions.

5. Feed according to one of the preceding claims, characterised in that the fibres are compressed to a density which is higher than 150 kg/m³.

6. Method of packaging a feed for domestic animals in accordance with one of the claims 1 - 5, **characterised in that** the fibres of loose material are transported into the pressing chamber (23) and compressed in the pressing chamber (23) from two directions (D, E) perpendicular to the transport direction (C) whereby the pressing in both perpendicular directions (D, E) is done one after the other and during the pressing in one of the directions the material in the pressing chamber (23) is cut into portions (2).

7. Method according to claim 6, **characterised in that** after pressing the material is wrapped in plastic foil (33) against which it can be resiliently expand. the pre-compacted fibres are compressed by moving pressing walls towards each other, perpendicular to the longitudinal direction of the compacting channel.

8. Method according to claim 6, **characterised in that** during the pressing operation the distance between opposing sides of the compression chamber (23) perpendicular to the feed direction (C) is reduced to less than half .

9. Method according to one of claims 6 - 8, **characterized in that** the fibres are pre-compacted and transported by pressing means (10) in a compacting channel (6) while during pre-compacting, the fibres are being moved with respect to each other while they are displaced over a plate (12) having slots (21).

10. Method according to one of claims 6-8, **characterised in that** a discharge opening (7) between the compacting channel (6) and the compression chamber (23) is enlarged or reduced by a control (16, 17) connected to a weighing device such that the weight of the packaged fibres as measured after the compression chamber (23) remains constant.

11. Apparatus for packaging feed for domestic animals in accordance with one of the claims 1 - 5, comprising transport means (8, 9, 10) for transporting loose material into a pressing chamber (23) and packaging means (29, 33, 35) connected to the pressing chamber (23) for wrapping the compressed material into a bale, **characterized in that** the pressing chamber (23) comprises two pressing means (24, 26) for compacting the material in the pressing chamber each working in a direction (D, E) perpendicular to each other and knives (25) working with one of the pressing means (24, 26) for cutting the compressed material in portions.

## Patentansprüche

1. Futter für domestizierte Tiere, bestehend unter anderem aus Pflanzenmaterialien, wie zum Beispiel Heu oder Stroh, die getrocknet und zusammengepresst und durch Verpacken in einen Ballen (1) gepackt sind, wobei das Material in dem Ballen mit Schneidflächen (3) versehen ist, um ein Trennen des Materials von dem Ballen (1) zu verbessern, **dadurch gekennzeichnet, dass** der Ballen (1) senkrecht zur Längsrichtung durch Schneidflächen (3) in Abschnitte (2) unterteilt ist, und die Fasern parallel zu den Schneidflächen (3) zusammengedrückt sind.

2. Futter nach Anspruch 1, **dadurch gekennzeichnet, dass** die Verpackung eine geschlossene Kunststofffolie ist, gegen welche die Fasern elastisch entspannt sind.

3. Futter nach Anspruch 1 oder 2, **dadurch gekennzeichnet, dass** der Abstand zwischen den Schneidflächen (3) im Wesentlichen 10 cm beträgt.

4. Futter nach Anspruch 2 oder 3, **dadurch gekennzeichnet, dass** das Pflanzenmaterial von kleinem gebrochenen und/oder zerkleinertem Fasermaterial und anderen Verunreinigungen abgelöst ist.

5. Futter nach einem der vorangegangenen Ansprüche, **dadurch gekennzeichnet, dass** die Fasern auf eine Dichte zusammengedrückt sind, die höher als 150 kg/m³ ist.

6. Verfahren zum Verpacken eines Futters für domestizierte Tiere entsprechend einem der Ansprüche 1 bis 5, **dadurch gekennzeichnet, dass** die Fasern von einem losen Material in die Kompressionskammer (23) transportiert und in der Kompressionskammer (23) von zwei senkrecht zu der Transportrichtung (C) verlaufenden Richtungen (D, E) zusammengedrückt werden, wobei das Zusammendrücken in beiden senkrechten Richtungen (D, E) nacheinander ausgeführt wird, und während des Zusammendrückens in einer der Richtungen das Material in der Kompressionskammer (23) in Abschnitte (2) geschnitten wird.

7. Verfahren nach Anspruch 6, **dadurch gekennzeichnet, dass** das Material nach dem Zusammendrücken in eine Kunststofffolie (33) eingepackt wird, gegen welche es sich elastisch ausdehnen kann, und die vorverdichteten Fasern durch aufeinander zu bewegen von Presswänden senkrecht zu der Längsrichtung des Verdichtungskanals zusammengedrückt werden.

8. Verfahren nach Anspruch 6, **dadurch gekennzeichnet, dass** während des Pressvorgangs der Abstand zwischen einander gegenüberliegenden Seiten der Kompressionskammer (23) senkrecht zu der Zuführrichtung (C) auf weniger als die Hälfte reduziert wird.

9. Verfahren nach einem der Ansprüche 6 bis 8, **dadurch gekennzeichnet, dass** die Fasern durch Pressmittel (10) vorverdichtet und in einen Verdichtungskanal (6) transportiert werden, derweil die Fasern während des Vorverdichtens in Bezug zueinander bewegt werden, während sie über einer Platte (12) verschoben werden, welche Schlitze (21) aufweist.

10. Verfahren nach einem der Ansprüche 6 bis 8, **dadurch gekennzeichnet, dass** eine Auslassöffnung (7) zwischen dem Verdichtungskanal (6) und der Kompressionskammer (23) durch eine Kontrolleinrichtung (16, 17) vergrößert oder verkleinert wird, die mit einer Wägevorrichtung verbunden ist, so dass das Gewicht der gepackten Fasern, wie nach der Kompressionskammer (23) gemessen, konstant bleibt.

11. Vorrichtung zum Verpacken von Futter für domestizierte Tiere gemäß einem der Ansprüche 1 bis 5, umfassend Transportmittel (8, 9, 10) zum Transportieren von losem Material in eine Kompressionskammer (23), und mit der Kompressionskammer (23) verbundene Packmittel (29, 33, 35) zum Packen des zusammengepressten Materials in einen Ballen, **dadurch gekennzeichnet, dass** die Kompressionskammer umfasst: zwei Pressmittel (24, 26) zum Verdichten des Materials in der Kompressionskammer, wobei jedes der Pressmittel in einer zu dem anderen Pressmittel senkrechten Richtung (D, E) arbeitet, und mit einem der Pressmittel (24, 26) zusammenarbeitende Messer (25) zum Schneiden des zusammengedrückten Materials in Abschnitte.

## Revendications

1. Aliment pour animaux domestiques constitué entre autres d'une matière végétale comme par exemple du foin ou de la paille, séchée et comprimée et emballée au moyen d'une enveloppe sous la forme d'une balle (1), laquelle matière située dans la balle est pourvue de faces de coupe (3) permettant d'améliorer la séparation de la matière à partir de la balle (1), caractérisé en ce que la balle (1) est divisée en portions (2) par des surfaces de coupe (3) perpendiculaires à la direction longitudinale, et les fibres sont comprimés parallèlement aux faces de coupe (3).

2. Aliment selon la revendication 1, caractérisé en ce que l'enveloppe est une feuille de matière plastique fermée, contre laquelle les fibres sont étendues élastiquement.

3. Aliment selon la revendication 1 ou 2, caractérisé en ce que la distance entre les faces de coupe (3) est égale essentiellement à 10 cm.

4. Aliment selon la revendication 2 ou 3, caractérisé en ce que la matière végétale est tirée d'une matière fibreuse finement fragmentée et/ou broyée et d'autres éléments polluants.

5. Aliment selon l'une des revendications précédentes, caractérisé en ce que les fibres sont comprimées à une densité qui est supérieure à 150 kg/m³.

6. Procédé d'emballage d'un aliment pour animaux domestique selon l'une quelconque des revendications 1-5, caractérisé en ce que les fibres de matière lâche sont introduites dans la chambre de pressage (23) et sont comprimées dans la chambre de pressage (23) dans deux directions (D, E) perpendiculaires à la direction de transport (C), ce qui a pour effet que le pressage dans les deux directions perpendiculaires (D, E) est exécuté dans une direction après l'autre et, pendant le pressage dans l'une des directions, la matière située dans la chambre de pressage (23) est découpée en portions (2).

7. Procédé selon la revendication 6, caractérisé en ce qu'après le pressage, la matière est enveloppée dans une feuille plastique (33), contre laquelle elle peut être étendue élastiquement, les fibres préalablement tassées sont comprimées par rapprochement de parois de pressage l'une vers l'autre, perpendiculairement à la direction longitudinale du conduit de compactage.

8. Procédé selon la revendication 6, caractérisé en ce que pendant l'opération de pressage, la distance entre des côtés opposés de la chambre de pressage (23), perpendiculairement à la direction d'amenée (C), est réduite à moins de sa moitié.

9. Procédé selon l'une des revendications 6-8, caractérisé en ce que les fibres sont préalablement compactées et transportées par des moyens de pressage (10) dans un conduit de compactage (6), alors que pendant le compactage préalable, les fibres sont déplacées les unes par rapport aux autres tout en étant déplacées au-dessus d'une plaque (12) comportant des fentes (21).

10. Procédé selon l'une des revendications 6-8, caractérisé en ce qu'une ouverture de déchargement (7) entre le conduit de compactage (6) et la chambre de compression (23) est élargie ou réduite par une unité de commande (16, 17) connectée à un dispositif de pesée de sorte que le poids des fibres tassées, tel qu'il est mesuré en aval de la chambre de compression (23), reste constant.

11. Appareil pour emballer un aliment pour animaux domestiques selon l'une des revendications 1-5, comportant des moyens de transport (8, 9, 10) pour transporter une matière lâche pour l'introduire dans une chambre de pressage (23), et des moyens d'emballage (29, 33, 35) raccordés à la chambre de pressage (23) pour enrouler le matériau comprimé sous la forme d'une balle, caractérisé en ce que la chambre de pressage (23) comprend deux moyens de pressage (24, 26) servant à compacter le matériau dans la chambre de pressage, chacun des moyens travaillant dans l'une des directions (D, E) perpendiculaires entre elles, et des couteaux (25) travaillant avec l'un des moyens de pressage (24, 26) pour découper le matériau comprimé en portions.
